# EUROPÄISCHE PATENTSCHRIFT

(11) **EP 2 599 383 B1**
(45) Veröffentlichungstag und Bekanntmachung des Hinweises auf die Patenterteilung: **04.10.2017**
(21) Anmeldenummer: 12194699.0
(22) Anmeldetag: 28.11.2012
(51) Int. Cl.: A01K 1/02

(54) **Vorhanganordnung für einen Ferkelkasten**
Curtain arrangement for a piglet box
Dispositif de rideau d'une boîte de porcelet

(30) Priorität: 30.11.2011 CH 19022011
(43) Veröffentlichungstag der Anmeldung: 05.06.2013
(73) Patentinhaber: Koller, Ueli, 6274 Eschenbach (CH)
(72) Erfinder: Koller, Ueli, 6274 Eschenbach (CH)
(74) Vertreter: Felber, Josef

(56) Entgegenhaltungen:
- EP-A1- 0 742 999
- EP-A2- 0 338 580
- NL-A- 9 001 794

## Beschreibung

Die vorliegende Erfindung betrifft eine Vorhanganordnung aus Vorhang und Befestigungsmitteln für einen Ferkelkasten, sodass der Vorhang in besonderer Weise am Ferkelkasten befestigbar ist. Solche Ferkelkasten dienen der Aufzucht von Frischferkeln bis zu deren Entwöhnung von der Muttersau und der anschliessenden Aufzucht bis zu einem Gewicht von 25 Kilogramm Lebendgewicht.

In der Ferkelproduktion wird die Wirtschaftlichkeit des Verfahrens in erster Linie über die Anzahl der erzeugten Ferkel je Sau und Jahr bestimmt. Es werden gesunde, frohwüchsige Tiere in einem einheitlichen Wurf angestrebt. Ein Großteil der Ferkelverluste konzentriert sich auf die ersten Lebenstage der Tiere. Hier gilt es, den Ferkeln optimale Startbedingungen zu schaffen, wobei die Klimagestaltung im unmittelbaren Umfeld der Tiere eine wesentliche Rolle spielt, vor allem bezüglich der angebotenen Wärme. Das Thermoregulationsvermögen von neugeborenen Ferkeln muss sich innerhalb der ersten Lebenswochen erst aufbauen, so dass sie gegenüber niedrigen Temperaturen sehr anfällig sind. Die Reserven an Glykogen (tierische Stärke) in der Leber der frisch geborenen Tiere sind äußerst gering. Eine nennenswerte Produktion findet erst ca. ab dem 7. Lebenstag statt (Eich, Schmidt, 1998). Kommt es zu einer Unterkühlung der Tiere, so werden die vorhandenen Leberstärkereserven schnell aufgebraucht. Bei wesentlich zu niedrig liegenden Umgebungstemperaturen kann auch der Tod der Tiere die Folge sein (zentralnervöse Störungen, schlafsüchtige Ferkel). Daher gehört zu einer optimalen Haltungsumwelt ein geschützter und ausreichend temperierter Ferkelbereich (Ferkelnest). Die Ferkel erhalten die Möglichkeit, sich hier zum Ruhen (75 - 80 % der Tageszeit) vom Bewegungsbereich der Sau zurück zu ziehen. In diesem Bereich sollen die Ferkel, geschützt gegen Erdrückungsgefahr, gleichmäßig, permanent und ausreichend mit Wärme versorgt werden. Die aufgenommen Nahrungsenergie soll möglichst "verlustarm" für die tägliche Gewichtszunahme der Ferkel zur Verfügung stehen (vgl. Baey-Ernsten, 1995). In nicht eingestreuten Haltungssystemen wird von einem Temperaturbedarf der Ferkel von 32-35 Grad zum Zeitpunkt der Geburt ausgegangen. Im Laufe der ersten 2-4 Lebenswochen sinkt dieser Bedarf dann auf rund 26 Grad Umgebungstemperatur. Als Wärmesysteme zum Einsatz kommen Strahlungsheizungen (Elektro-Infrarotstrahler, Gasstrahler, Flächenstrahler) und elektrisch oder warmwasserbeheizte Bodenheizungen. Alle diese Systeme haben jeweils spezifische Vor- und Nachteile. Rückschlüsse auf die korrekte Temperierung des Nestbereiches können insbesondere aufgrund des Liegeverhaltens der Ferkel gezogen werden. Im Idealfall liegen die Ferkel im Nest in der Seitenlage nebeneinander.

Herkömmliche Ferkelkasten haben noch gravierende Mängel. Im Wesentlichen weisen sie ein viel zu grossen Wärmeverlust auf, sodass die Heizkosten entsprechend zu Buch schlagen. Die Ferkel bevorzugen kühlere Atemluft und deshalb weisen viele Ferkelkasten in Bodennähe eine rechteckige Öffnung auf, die sich über die ganze Länge des Ferkelkastens erstreckt, und durch welche die Ferkel ihre Nase nach draussen strecken, um kühlere Aussenluft zu atmen, während das Innere des Ferkelkastens auf einer Temperatur von 32°C bis 35°C aufgeheizt gehalten wird. In den überwiegenden Fällen wird eine elektrische Heizung betrieben, und entsprechend hoch fallen die Stromkosten aus. Beim Betrieb eines einzigen gut Isolierten und mit dem neu erfundenen Vorhang ausgestatteten Ferkelkastens kann während der Säugezeit mit Stromkosten von ca. 0.20 bis 0.50 CHF gerechnet werden. Während der blosse Betrieb einer Wärmelampe mit 1.50 bis 3.00 CHF pro Tag zu Buche schlägt, wobei die Ferkel bis zu 30 Tage in geheizten Bereichen aufgezogen werden müssen. Wenn eine Vielzahl von Ferkelkästen eingesetzt werden, so summieren sich diese Kosten übers Jahr, und ein grösserer Zuchtbetrieb kann übers Jahr ohne Weiteres Tausende von CHF an Energiekosten einsparen, wenn er gut isolierte Ferkelkästen einsetzen würde. Durch gut isolierte Ferkelkasten kann die Stalltemperatur tiefer gehalten werden. Die Schadgaskonzentration wird auch tief gehalten was die Gesundheit der Tiere fördert. Aus EP 0 742 999 A1 ist eine Tierschutzhütte mit doppelwandiger Vorhanganordnung bekannt, in welcher eine Luftschicht als Wärmeisolationsschicht wirkt. Der Vorhang besteht aus einer Anzahl hängender Streifen, die nebeneinander und übereinander über einen Auflagebalken gelegt und mittels einer Klemmschiene darauf festgeklemmt werden. Es wird aber im Innern des Vorhangs kein Luftpolster dicht eingeschlossen.

Es ist die Aufgabe der vorliegenden Erfindung, den Mängeln der bekannten Ferkelkästen abzuhelfen und namentlich folgende Problembereiche noch besser zu lösen: Die Wärmeisolation des Ferkelkastens, die Auswechselbarkeit des Vorhanges, sowie die Zugänglichkeit des Ferkelkastens für das Ausmisten, Einstreuen und für die Tierkontrolle.

Diese Aufgabe wird gelöst von einer Vorhanganordnung bestehend aus einem Vorhang und zugehörigen Befestigungsmitteln zur Bildung der Frontseite eines Ferkelkastens zur Aufzucht von Ferkeln, wobei der Ferkelkasten einen Boden, eine Rückwand, zwei Seitenwände und eine freie Front aufweist, und einen hinten angeschlagenen Kastendeckel, wobei der Vorhang mindestens doppelwandig ausgeführt ist und in seinem Innern eine Luftschicht als Wärmeisolationsschicht einschliesst, wobei sich diese Vorhanganordnung durch die Merkmale des Anspruchs 1 auszeichnet. Die Aufgabe wird auch gelöst von einem Ferkelkasten mit einer Vorhanganordnung nach einem der Ansprüche 1 bis 8, welcher sich durch die Merkmale nach Anspruch 9 auszeichnet.

Anhand der beigefügten Zeichnung wird dieser Vorhang und seine Aufhängung für einen verbesserten Ferkelkasten vorgestellt und nachfolgend wird sein Aufbau und seine Funktion näher beschrieben. Es zeigt:
- Fig. 1: Die Ferkelkiste mit dem Vorhang im geöffneten Zustand in perspektivischer Ansicht.
- Fig. 2: Die Ferkelkiste mit dem Vorhang im geschlossenen Zustand in perspektivischer Ansicht.
- Fig. 3: Den Aufbau des Vorhangs für die Frontseite der Ferkelkiste, mit noch offenen Seitenrändern;
- Fig. 4: Die Einbauweise des Vorhangs für die Frontseite der Ferkelkiste.

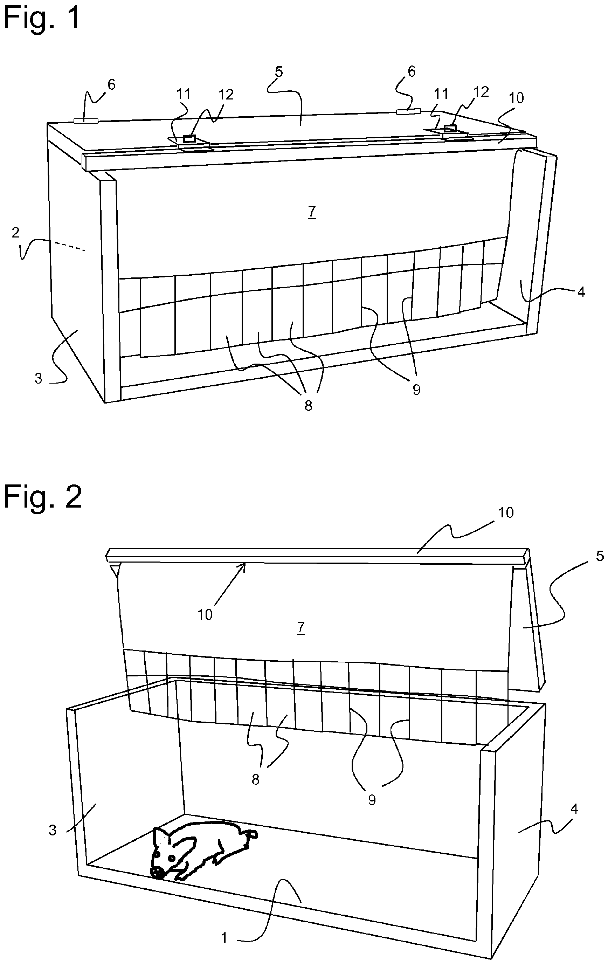

In Figur 1 ist der Ferkelkasten mit diesem besonderen Vorhang und seiner Aufhängung im geschlossenem Zustand des Ferkelkastens gezeigt. Der Ferkelkasten weist im gezeigten Beispiel eine Grundplatte als Kastenboden 1 auf, eine Rückwand 2 sowie auf beiden Seiten je eine Seitenwand 3,4. Hinten am oberen Rand der Rückwand 2 ist der Kastendeckel 5 über zwei Scharniere 6 angeschlagen. Der Kastendeckel 5 ist weniger breit als der Kastenboden, sodass bei abgeklapptem Kastendeckel 5 wie hier sichtbar dieser Kastendeckel 5 nicht ganz an die Vorderseite des Kastens reicht. Der Grund dafür wird später klar. An der Vorderkante des Kastendeckels 5 ist der besondere Vorhang 7 befestigt, welcher unten in eine Reihe von Streifen 8 ausläuft. Diese Streifen 8 sind 10 bis 15 Zentimeter breit und machen etwa einen Fünftel bis einen Drittel der Vorhanghöhe aus. Sie können sich aber auch über die ganze Vorhanghöhe erstrecken, indem sie oben am Vorhang angeschweisst sind oder gar separat befestigt werden. Der Vorhang 7 weist dadurch im unteren Bereich eine Anzahl Schlitze 9 auf, die stets zwischen zwei Streifen 8 gebildet sind. Oberhalb der Schlitze 9 ist der Vorhang 7 doppelwandig ausgeführt, mit einer hinteren und einer vorderen Folie, die längs der seitlichen Ränder luftdicht verschweisst sind, sodass ein Luftpolster im Innern des Vorhangs 7 gebildet ist, welches hervorragend wärmeisolierend wirkt. Längs des vorderen Randes des Kastendeckels 5 verläuft ein zum Vorhang 7 gehörendes Profil, das aus Stahl, Aluminium oder aus Kunststoff gefertigt sein kann, zum Beispiel aus Polyester, und wie hier gezeigt zum Beispiel als Vierkantprofil 10 ausgeführt. Oben auf diesem Profil 10 sind zwei Beschläge 11 befestigt, etwa durch Verschraubung oder Vernietung. Diese Beschläge weisen einen Schlitz auf, welcher über je eine Lasche 12 passt, die in senkrecht auf dem Kastendeckel 5 montiert ist. Damit lässt sich das Profil mit diesen zwei Beschlägen 11 an der Frontseite eines Kastendeckels 5 befestigen und auch leicht wieder wegnehmen. Die Beschläge 11 passen mit ihren hinteren Rändern in entsprechende Aufnahmenuten auf der Oberseite des Kastendeckel 5. Hernach ragen die Laschen 12 durch die Schlitze in den Beschlägen, und somit kann eine Klinke oder ein Schloss durch die Lasche gesteckt werden, wonach des Profil gesichert am Kastendeckel montiert ist.

Die Figur 2 zeigt den Ferkelkasten mit diesem Vorhang im geöffneten Zustand, das heisst mit aufgeschwenktem Kastendeckel 5. Der Kastendeckel 5 lässt sich nämlich um die beiden hinten angeschlagenen Scharniere in der gezeigten Weise mit einem Aufzugsystem hochschwenken. Es können auch elektrische Aufzüge montiert werden, sodass das Hochschwenken des Kastendeckels erleichtert wird. Wenn der Kastendeckel in der gezeichneten Weise hochgeschwenkt ist, wird der Blick ins Innere des Ferkelkastens freigegeben, um eine freie Übersicht zu gewähren. Ausserdem lässt sich dann der Ferkelkasten bei Bedarf sehr bequem ausmisten und man kann gut zugänglich neu einstreuen. Der Vorhang 7 ist am Profil 10 befestigt, wie noch näher erläutert wird.

Der Ferkelkasten wird Abferkelbereich der Muttersau oder im Aufzuchtbereich der Ferkel eingebaut. Die Ferkel liegen in der Regel in einer Reihe parallel nebeneinander in diesem Ferkelkasten und nehmen diese Lage von selbst ein, wie in der Figur 2 eingezeichnet. Dabei strecken sie ihre Nase durch die Schlitze 9 zwischen den Streifen 8 des Vorhangs 7 nach draussen, um Frischluft zu atmen. Die Streifen 8 des Vorhangs 7 schmiegen sich an ihre Köpfe an und verhindern einen grösseren Wärmeabfluss aus dem Ferkelkasten nach draussen. Jetzt wird auch klar, warum der Kastendeckel weniger breit als der Kastenboden ausgeführt ist. Damit ist nämlich der Vorhang 7 etwas von der Front des Kastens zurückgesetzt und die Nasen der Ferkel, wenn sie diese durch den Vorhang 7 strecken, liegen auf dem vorderen Randbereich des Kastenbodens auf. Andererseits liegt der Vorhang 7 mit seinen seitlichen Rändern nahtlos an den Seitenwänden 3,4 an, und verhindert dort den Austritt von Wärme aus dem Innern des Kastens. Der Vorhang 7 wird vorteilhaft so gefertigt, dass er sich nahtlos in einem Stück über die ganze Kastenbreite erstreckt und dann bündig an die Seitenwände 3,4 anschliesst. Das Innere des Ferkelkastens wird nämlich mittels elektrisch betriebener Wärmeplatten geheizt, die an der Unterseite des Kastendeckels 5 montiert sind. Besonders wichtig ist deshalb die Wärmeisolationsfähigkeit dieses Vorhangs 7, aber auch der Seitenwände 3,4, der Bodenplatte 1 des Kastens wie auch der Rückwand 2 und des Kastendeckels 5. Hierzu bestehen diese Wände aus besonders gut wärmeisolierenden Platten, zum Beispiel aus Kunststoff-Platten mit Isoliermaterial in ihrem Kern. Oder die Platten sind innen oder aussen mit besonderem Isolationsmaterial beschichtet oder ausgerüstet, oder gar beidseits. Ganz wichtig ist auch die Isolationsfähigkeit des Vorhangs. Die ganze Wärmeisolation des Ferkelkastens nützt nicht viel, wenn die meiste Wärme wie bei herkömmlichen Systemen durch den einfach geführten Vorhang nach draussen abfliesst.

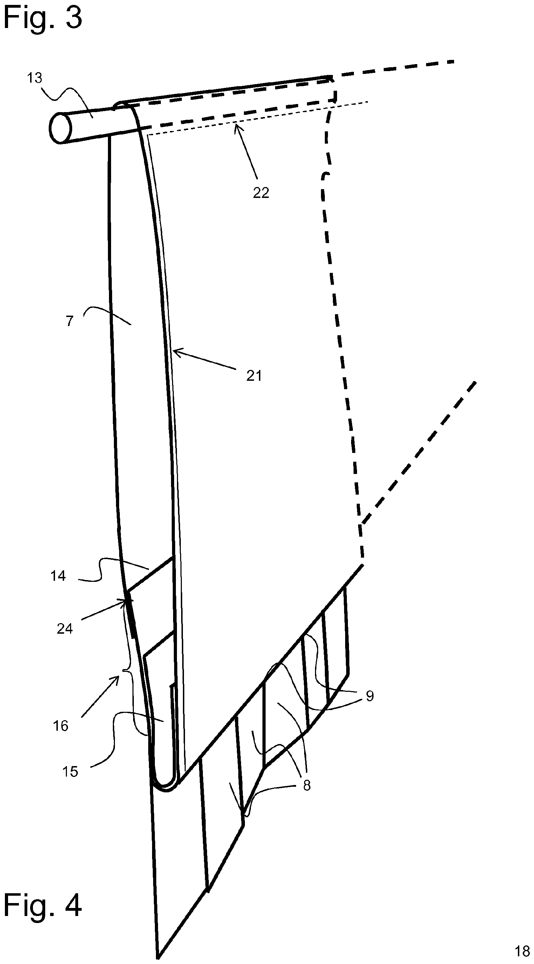

Damit auch der Vorhang 7 an der Kastenfront gut wärmeisolierend wirkt und für das Durchlaufen der Ferkel dennoch geschmeidig bleibt, ist er ausgeführt wie in Figur 3 gezeigt. In dieser Figur ist der Vorhang auf einer Seite für sich alleine dargestellt, noch mit offenen Seitenrändern. Er besteht aus einer Kunststoff-Folie. Diese ist doppelt geführt, indem sie also ab den Steifen 8, das heisst ab der Stelle 24, wo die Streifen 8 oben enden, nach oben führt und oben um eine Stange 13 geführt ist. Auf der anderen Seite der Stange 13 führt die Folie wieder hinunter bis etwa auf etwa 12 bis 18 cm über den Kastenboden, um dann erneut um 180° gewendet wieder nach oben zu führen, um schliesslich mit der vorderen hängenden Folie eine Überlappung 14 zu bilden, wo die beiden überlappenden Stücke der Folie miteinander verschweisst sind. So wird im Querschnitt gesehen eine geschlossene Schlaufe gebildet. Links und rechts werden die Folien längs ihres Randes und der Linie 21 verschweisst, und optional auch längs der Linie 22, damit ein in sich geschlossenes Luftkissen als Isolation entsteht. Die Verschweissung dieser Kunststoff-Folien erfolgt in üblicher Weise mittels Heissluft. Ausgenommen von der Verschweissung ist natürlich die Öffnung am oberen Rand, zur Einführung der Stange 13, welche als Halterung im Vierkantprofil 10 dient. Die verarbeiteten Folien dürfen nicht steif sein, sondern müssen geschmeidig und beweglich sein, damit die Ferkel problemlos den Vorhang durchschreiten können, und somit aus dem Kasten gehen und wieder in ihn hineingehen können. Deshalb ist in der Folie ein Weichmacher eingebaut. Die untere 180°-Wendung ist durch die Reibung der ein- und austretenden Ferkel stark beansprucht. Dadurch wird der Weichmacher nach 2 bis 3 Jahren Einsatz abgebaut und die Folie wird brüchig. Damit das Luftkissen weiterhin geschlossen bleibt, wird die 180°-Wendung unten deshalb mit einer eingeschweissten Einlage 15 versehen und verstärkt. Im Bereich 16 sind die Streifen von vorne aufgeschweisst und können aus dem gleichen Material wie das Luftkissen gebildet sein. Vorzugsweise aber handelt es sich bei diesen Streifen 8 um transparente Kunststoff-Folien-Streifen. Zwischen den einzelnen Streifen 8, die Stoss an Stoss aneinandergereiht befestigt werden, werden somit Schlitze 9 gebildet, durch welche die Ferkel ihre Nase strecken können, wobei aber ihre Körper dennoch in der Wärme bleiben. Durch die doppelwandige Ausführung des Vorhanges 7 schliesst dieser eine Luftschicht ein, welche wärmeisolierend wirkt. Und seitlich liegt ja der Vorhang 7 wie schon beschrieben satt an den Seitenwänden des Kastens an, sodass dort eine Wärmebarriere gebildet ist. Bei Bedarf können die Ferkel durch den Vorhang hindurch den Ferkelkasten verlassen, um die Muttersau zu säugen oder in der Aufzucht Futter aufzunehmen und um sich beschäftigen zu können. Wenn sie satt sind, gehen sie von selbst wieder an die Wärme und legen sich im Kasten wieder so hin, dass sie ihre Nasen nach draussen strecken.

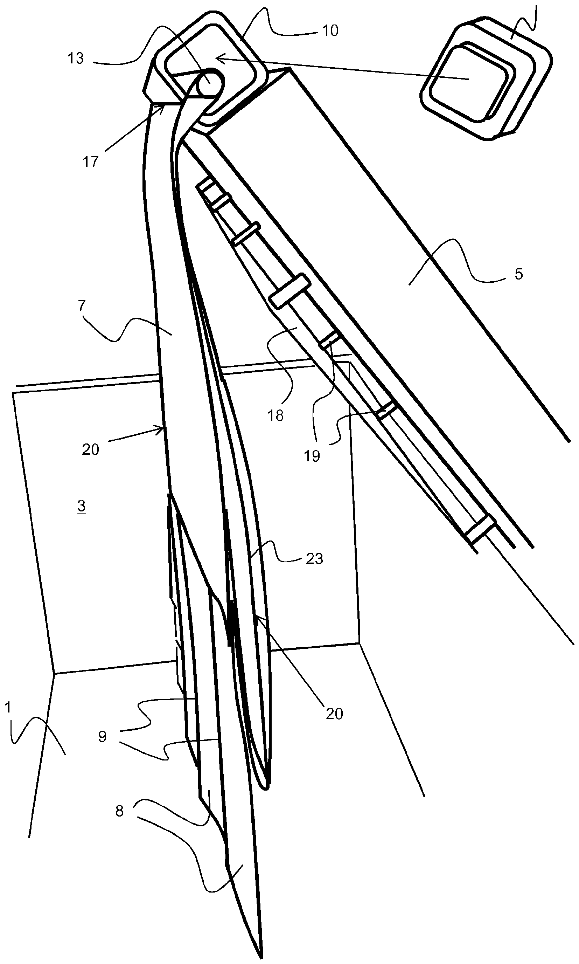

In Figur 4 ist der Vorhang 7 hängend an der geöffneten Kastendeckel 5 befestigt dargestellt. Längs der beiden seitlichen Ränder 20 sind die vordere Vorhangfolie und die hintere Vorhangfolie längs der Verschweissung 23 zusammengeschweisst, sodass im Innern ein Luftpolster eingeschlossen ist. Zum Befestigen des Vorhangs ist das Profil 10 mit einem Schlitz 17 ausgerüstet und an der Vorderkante des Kastens 5 befestigt, wozu die bereits beschriebenen Beschläge 11 dienen. Durch diesen Schlitz 17 im Profil 10 wird der Vorhang von der Seite her mit seinem Halterungsrohr 13 eingeschoben. Danach ist er am Profil 10 sicher gehalten, weil der Durchmesser des Halterungsrohrs 13 grösser ist als die lichte Weite des Schlitzes 17. Damit das Halterungsrohr 13 beim Einsatz nicht selbständig seitlich ausfahren kann, wird die Öffnung des Vierkantprofils 10 durch eine Aufsteckkappe 18 abgedeckt. Durch das Entfernen der Kappe 18 kann der Vorhang sehr leicht ausgewechselt werden. Auf der Unterseite des Kastendeckels erkennt man eine Heizplatte 18, welche über die Befestigungsstäbe 19 am Kastendeckel 5 montiert ist. Durch den Kastendeckel ist nicht nur die elektrische Zufuhrleitung verlegt, sondern auch ein Temperaturfühler, welcher die im Kasteninnern gemessene Temperatur an eine Steuerung zurückmeldet. Damit kann die Temperatur im Kasteninnern über einen Thermostaten in einem engen Temperaturband eingehalten werden. Sobald die Temperatur über einen einstellbaren Wert absinkt, werden die Heizplatten eingeschaltet und sobald die Temperatur auf einen ebenfalls einstellbaren Wert angestiegen ist, werden sie wieder abgeschaltet. Durch die gute Isolation dieses Ferkelkastens, vor allem auch auf der Frontseite mit dem Vorhang 7, der hierzu speziell doppelwandig ausgeführt ist, um mit seinem Luftkissen eine Isolationsschicht zu bilden, behält er seine Wärme besser als Ferkelkästen mit herkömmlichen Vorhängen. Das schlägt sich in einer deutlich niedrigeren Stromrechnung nieder. Ausserdem ist es den Ferkeln sehr wohl, was daran abzulesen ist, dass sie nicht aufeinander liegen, sondern sich schön in einer Reihe parallel zueinander nebeneinanderlegen und ihre Nasen durch die Vorhangschlitze an die Frischluft strecken, was ihnen besonders behagt. Trotzdem werden ihre Körper in einer wünschenswerten Temperatur von 32°C bis 35°C gehalten, und sie sind sicher davor geschützt, dass sie nicht von der Muttersau erdrückt werden.

## Patentansprüche

1. Vorhanganordnung bestehend aus einem Vorhang und zugehörigen Befestigungsmitteln zur Bildung der Frontseite eines Ferkelkastens zur Aufzucht von Ferkeln, wobei der Ferkelkasten einen Boden (1), eine Rückwand (2), zwei Seitenwände (3,4) und eine freie Front aufweist, und einen hinten angeschlagenen Kastendeckel (5), wobei der Vorhang (7) mindestens doppelwandig ausgeführt ist und in seinem Innern eine Luftschicht als Wärmeisolationsschicht einschliesst, wobei der Vorhang (7) aus einer Kunststoff-Folie besteht, und wobei der Vorhang unten in eine Reihe von vertikalen, aneinandergereihten, hängenden Streifen ausläuft, **dadurch gekennzeichnet, dass** der Vorhang zur Bildung mindestens einer Doppelwandigkeit verschweisste Ränder aufweist, sodass im Innern ein Luftpolster eingeschlossen ist, und dass er lösbar am Kastendeckel (5) befestigbar ist, wozu ein Profil (10) mit durchgehendem Schlitz (17) lösbar am vorderen Rand des Kastendeckels angebracht ist, und der Vorhang (7) an seinem oberen Rand eine Schlaufe bildet, in welche ein zu den Befestigungsmitteln gehörendes Halterungsrohr (13) einsteckbar ist, und die Schlaufe mit Halterungsrohr (13) von der Stirnseite her in den Schlitz (17) dieses Profils (10) einführbar ist.

2. Vorhanganordnung nach Anspruch 1, ***dadurch gekennzeichnet,* dass** der Vorhang (7) aus einer einstückigen Kunststoff-Folie besteht, indem diese am oberen Ende und am unteren Ende des Vorhangs je um 180° umgeschlagen ist und im Querschnitt zu einer geschlossenen Schlaufe verschweisst ist, wobei die hintere und vordere Kunststoff-Folie des so gebildeten Vorhangs längs seiner seitlichen Ränder (21) verschweisst sind.

3. Vorhanganordnung nach einem der vorangehenden Ansprüche, ***dadurch gekennzeichnet,* dass** der Vorhang (7) so bemessen ist, dass er bündig an die beiden Seitenwände (3,4) des Ferkelkastens anzuschliessen bestimmt ist.

4. Vorhanganordnung nach einem der vorangehenden Ansprüche, ***dadurch gekennzeichnet,* dass** der Vorhang (7) unten in die Reihe von vertikalen, aneinandergereihten, hängenden Streifen (8) ausläuft, indem Folienstreifen im unteren Bereich des Vorhangs eingeschweisst sind, oder Folienstreifen im oberen Bereich des Vorhangs eingeschweisst sind und sich über die ganze Höhe des Vorhanges erstrecken.

5. Vorhanganordnung nach einem der Ansprüche 1 bis 4, ***dadurch gekennzeichnet,* dass** das Profil (10) der Befestigungsmittel mit Beschlägen (11) ausgerüstet ist, zur Befestigung des Profils (10) am Deckel eines auszurüstenden Ferkelkastens.

6. Vorhanganordnung nach einem der Ansprüche 1 bis 4, ***dadurch gekennzeichnet,* dass** das Profil (10) der Befestigungsmittel ein Vierkantprofil mit dem durchgehendem Schlitz (17) längs seiner Unterseite ist, und seine Stirnseiten mit zugehörigen Aufsteckkappen (18) verschliessbar sind, und dieses Vierkantprofil mit zwei aufgeschraubten, aufgeschweissten oder aufgenieteten Beschlägen (11) ausgerüstet ist, mittels derer es an zugeordneten Gegenstücken der Beschläge (11) am Kastendeckel eines auszurüstenden Ferkelkastens lösbar und sicherbar befestigbar ist.

7. Vorhanganordnung nach Anspruch 6, ***dadurch gekennzeichnet,* dass** jeder der Beschläge (11) einen Schlitz aufweist, welcher über je eine dem Beschlag (11) als Gegenstück zugeordnete Lasche (12) am Kastendeckel (5) stülpbar ist, wobei diese Laschen (12) senkrecht auf dem Kastendeckel (5) montiert sind, sodass die Laschen (12) nach dem Überstülpen des Schlitzes über den Beschlag (11) ragen und das Profil (10) somit mittels je einer in die jeweilige Lasche eingreifenden Klinke oder je einem an der jeweiligen Lasche (12) anbringbaren Schloss lösbar und sicherbar am Ferkelkastendeckel befestigbar ist.

8. Vorhanganordnung nach einem der Ansprüche 1 bis 7, ***dadurch gekennzeichnet,* dass** das Profil (10) der Befestigungsmittel ein Vierkantprofil aus Stahl, Aluminium oder Kunststoff ist.

9. Ferkelkasten mit einer Vorhanganordnung nach einem der Ansprüche 1 bis 8, ***dadurch gekennzeichnet,* dass** der Ferkelkasten einen Boden (1), eine Rückwand (2), zwei Seitenwände (3,4) und eine freie Front aufweist, und einen hinten angeschlagenen Kastendeckel (5), an dem die Vorhanganordnung so lösbar befestigbar ist, dass sie die Frontseite des Ferkelkastens bildet, wobei diese Vorhanganordnung einen Vorhang (7) einschliesst, der aus einer Kunststoff-Folie gefertigt ist und mindestens doppelwandig ausgeführt ist und in seinem Innern eine Luftschicht als Wärmeisolationsschicht einschliesst, und der Vorhang (7) unten in eine Reihe von vertikalen, aneinandergereihten, hängenden Streifen (8) ausläuft, und dass die Vorhanganordnung Befestigungsmittel einschliesst, zur lösbaren Befestigung des Vorhangs (7) am Kastendeckel (5).

## Claims

1. A curtain assembly consisting of a curtain and associated fastening means for forming the front side of a piglet box for raising piglets, wherein the piglet box has a bottom (1), a back wall (2), two side walls (3, 4) and a free front, and a box lid (5) hinged to the back, wherein the curtain (7) is executed to be at least double-walled and in its interior encloses a layer of air as a heat insulating layer, wherein the curtain (7) consists of a plastic foil, and wherein the curtain runs out at the bottom in the form of a series of vertical, hanging strips placed side by side in a row, ***characterized in that***
the curtain has welded edges for forming at least a double wall, so that an air cushion is enclosed in the interior, and that it can be releasably fastened to the box lid (5), for which purpose a profile (10) with a continuous slot (17) is releasably attached to the front edge of the box lid, and the curtain (7) forms a loop at its upper edge into which a support pipe (13) belonging to the fastening means can be inserted, and the loop with the support pipe (13) can be introduced into the slot (17) of said profile (10) from the front side.

2. The curtain assembly according to claim 1, ***characterized in that*** the curtain (7) consists of an integral plastic foil through said foil being folded at the upper end and the lower end of the curtain by 180° in each case and being welded in cross-section to form a closed loop, wherein the back and the front plastic foil of the thus formed curtain are welded along its lateral edges (21).

3. The curtain assembly according to any one of the preceding claims, ***characterized in that*** the curtain (7) is dimensioned such that it is intended to be connected flush to the two side walls (3, 4) of the piglet box.

4. The curtain assembly according to any one of the preceding claims, ***characterized in that*** the curtain (7) runs out at the bottom in the form of the series of vertical, hanging strips (8) placed side by side in a row, through foil strips being welded into the lower portion of the curtain, or foil strips being welded into the upper portion of the curtain and extending over the entire height of the curtain.

5. The curtain assembly according to any one of claims 1 to 4, ***characterized in that*** the profile (10) of the fastening means is equipped with fittings (11) for fastening the profile (10) to the lid of a piglet box to be equipped.

6. The curtain assembly according to any one of claims 1 to 4, ***characterized in that*** the profile (10) of the fastening means is a square profile with the continuous slot (17) along its lower side, and its front sides can be closed with associated snap-on caps (18), and said square profile is equipped with two screwed, welded or riveted fittings (11) by means of which it it can be fastened releasably and lockably to associated counterparts of the fittings (11) on the box lid of a piglet box to be equipped.

7. The curtain assembly according to claim 6, ***characterized in that*** each of the fittings (11) has a slot that can be slipped in each case over a tab (12) on the box lid (5) allocated as counterpart to the fitting (11), wherein said tabs (12) are mounted on the box lid (5) perpendicularly, so that, after the slot has been slipped over, the tabs (12) project over the fitting (11) and the profile (10) can thus be fastened releasably and lockably to the lid of the piglet box by means of a pawl engaging in the respective tab or a lock attachable to the respective tab (12).

8. The curtain assembly according to any one of claims 1 to 7, ***characterized in that*** the profile (10) of the fastening means is a square profile of steel, aluminum or plastic.

9. A piglet box with a curtain assembly according to any one of claims 1 to 8, ***characterized in that*** the piglet box has a bottom (1), a back wall (2), two side walls (3, 4) and a free front and a box lid (5) hinged to the back, to which lid the curtain assembly can be fastened detachably to form the front side of the piglet box, wherein said curtain assembly includes a curtain (7) which is made of a plastic foil and is executed to be at least double-walled and in its interior encloses a layer of air as a heat insulating layer, and the curtain (7) runs out at the bottom in the form of a series of vertical, hanging strips (8) placed side by side in a row, and that the curtain assembly includes fastening means for detachably fastening the curtain (7) to the box lid (5).

## Revendications

1. Dispositif de rideau composé d'un rideau et des moyens de fixation associés pour former la face frontale d'un caisson pour porcelets pour nourrir des porcelets, le caisson pour porcelets contenant un fond (1); une paroi arrière (2), deux parois latérales et une face frontale libre et un couvercle de caisson (5) fixé à l'arrière, où le rideau (7) est réalisé au moins à double paroi et comporte à son intérieur une couche d'air comme couche d'isolation thermique, le rideau (7) étant composé dans d'une feuille de plastique et où le rideau se termine par des bandes verticales, juxtaposés et suspendues, ***caractérisé, en ce que*** le rideau comporte des bords pour former au moins une double parois soudées, de manière à ce qu'un coussin d'air soit inclus à l'intérieur, et **en ce qu'**il soit fixé de façon amovible sur le couvercle du caisson, pourquoi un profil avec une fente continue (10) est posé de façon amovible sur le bord avant du couvercle de caisson et le rideau (7) forme sur son bord supérieur une boucle, dans laquelle on peut insérer un tube de support (13) appartenant au moyens de fixation et la boucle avec le tube de support (13) peut être introduit à partir de côté frontal dans la fente (17) de ce profil.

2. Dispositif de rideau selon la revendication 1, ***caractérisé en ce que*** le rideau (7) est composé d'une feuille en matière synthétique où cette feuille est rabattue à chaque fois de 180° à l'extrémité supérieure et l'extrémité inférieure du rideau et est soudé dans la section transversale pour former une boucle fermée, où la feuille arrière en matière synthétique et la feuille avant en matière synthétique du rideau ainsi formé sont soudés le long de leur bords (21) latéraux.

3. Dispositif de rideau selon une des revendication précédentes, ***caractérisé en ce que*** le rideau (7) est dimensionné de manière à ce qu'il est aligné de façon af-fleurante aux parois latérales (3,4) du caisson pour porcelets.

4. Dispositif de rideau selon une des revendication précédentes, ***caractérisé en ce que*** le rideau (7) se termine dans la rangée des bandes (8) verticales, juxtaposés et suspendues, en soudant des bandes de feuilles sont soudés dans la zone inférieure du rideau ou des bandes de feuilles sont soudés dans la zone supérieure du rideau et s'étendent sur toute la hauteur du rideau.

5. Dispositif de rideau selon une des revendications 1 à 4, ***caractérisé en ce que*** le profil (10) des moyens de fixation est équipé d'armatures (11) pour fixer le profil (10) au couvercle d'un caisson pour porcelets à équiper.

6. Dispositif de rideau selon une des revendications 1 à 4, ***caractérisé en ce que*** le profil (10) est un profil carré avec la fente (17) continue le long de sa face inférieure, et ses faces frontales peuvent être fermées par des capuchons à enficher associés, et ce profil carré est équipé de deux armures (11) vissés, soudées et rivetées, au moyens desquelles on peut fixer de façon amovible et sécurisée sur des contreparties associées des armatures (11) sur le couvercle du caisson d'un caisson pour porcelets à équiper.

7. Dispositif de rideau selon la revendication 8, ***caractérisé en ce que*** chacune des armatures (11) comporte une fente qui peut être enfilée sur une patte (12) associée comme contrepartie à chaque fois à une armure (11), ces pattes (12) étant montées de façon perpendiculaire sur le couvercle de caisson (5) de manière à ce que les pattes (12) dépassent l'armature (11) après avoir couvert ladite fente, et le profil (10) peut être fixé ainsi par un loquet s'engageant à chaque fois dans la patte correspondante (12) ou peut être fixé à chaque fois à une serrure susceptible d'être fixé de façon amovible ou bloquée sur la patte correspondante (12).

8. Dispositif de rideau selon une des revendication 1 à 7, ***caractérisé en ce que*** le profil (10) des moyens de fixation est un profil carré en acier, aluminium ou en matière synthétique.

9. Caisson pour porcelets avec un dispositif de rideau selon une des revendications 1 à 8, ***caractérisé en ce que*** le caisson pour porcelets comporte un fond (1), une paroi arrière (2), deux parois latérales et une face frontale libre et un couvercle de caisson (5) fixé sur l'arrière sur laquelle le dispositif de rideau peut être fixé si amovible, qu'il forme la face frontale du caisson pour porcelets, ce dispositif d rideau comportant un rideau (7) en matière synthétique étant réalisé au moins à double paroi et comportant dans son intérieur une couche d'air comme d'isolation thermique, et le rideau (7) se termine en bas par des bandes (8) verticales, juxtaposés et suspendues **caractérisé en ce que** le dispositif de rideau comporte des moyens de fixation la fixation amovible du rideau (7) sur le couvercle de caisson (5).
